# EUROPÄISCHE PATENTSCHRIFT

(11) **EP 3 488 389 B1**
(45) Veröffentlichungstag und Bekanntmachung des Hinweises auf die Patenterteilung: **17.02.2021**
(21) Anmeldenummer: 17726563.4
(22) Anmeldetag: 11.05.2017
(51) Int. Cl.: G06K 19/06, G06K 1/02, H04R 1/10, H04R 5/033, H04L 9/08

(54) **VORRICHTUNG UND VERFAHREN ZUR ERZEUGUNG UND DETEKTIEREN EINER FÄLSCHUNGSSICHEREN IDENTIFIKATION**
DEVICE AND METHOD FOR PRODUCING AND DETECTING A FORGERY-PROOF IDENTIFICATION
DISPOSITIF ET PROCÉDÉ POUR PRODUIRE ET DÉTECTER UNE IDENTIFICATION INFALSIFIABLE

(30) Priorität: 21.07.2016 DE 102016113513
(43) Veröffentlichungstag der Anmeldung: 29.05.2019
(73) Patentinhaber: Fibro GmbH, 74855 Hassmersheim (DE)
(72) Erfinder: GURT, Jürgen, 74855 Hassmersheim (DE)
(74) Vertreter: Staeger & Sperling Partnerschaftsgesellschaft mbB
(86) Internationale Anmeldenummer: PCT/EP2017/061360
(87) Internationale Veröffentlichungsnummer: WO 2018/015037

(56) Entgegenhaltungen:
- EP-A1- 2 792 499
- DE-A1- 10 231 969
- DE-C1- 3 728 622
- US-A1- 2006 091 214

## Beschreibung

Die Erfindung betrifft ein Verfahren zur Ausbildung eines Erkennungsmerkmals bzw. einer fälschungssicheren Identifikation auf einer Teileoberfläche eines Bauteils oder Produktes, sowie ein Produkt oder Bauteil mit einem solchen Erkennungsmerkmal. Die Erfindung betrifft ferner eine Vorrichtung zum Detektieren und/oder Auslesen einer solchen Identifikation.

Viele Kopien und Fälschungen von Industrieprodukten sehen professionell aus und selbst wenn man ein Originalprodukt zum Vergleich daneben hält, fallen Unterschiede kaum oder gar nicht auf. Es kommt zunehmend vor, dass gefälschte Produkte auf den ersten Blick wie die Originale aussehen und die Original-Hersteller der Produkte im Rahmen der Gewährleistung für fremde Nachbauten in die Haftung genommen werden. Der betroffene Herstelle hat dann Probleme anhand von Produktmerkmalen nachzuweisen, dass es sich um einen Nachbau handelt.

So haben sich bereits diverse Lösungen am Markt entwickelt, um Produkte eindeutig zu identifizieren, wie z. B. Verbraucherschutzportale zum Thema Marken- und Produktfälschungen. Als Konsument können Sie sich darüber informieren, wie Sie ein Originalprodukt von einer Fälschung bzw. einem Nachbau unterscheiden.

Bei den aus dem Stand der Technik bekannten Maßnahmen zur Fälschungssicherung eines zu schützenden Gegenstandes wird der Gegenstand typischerweise mit Merkmalen (z. B. Wasserzeichen, Hologramme, chemische oder physische Veränderungen, etc.) versehen, die sich nur mit großer Fachkenntnis und/oder großem Aufwand kopieren lassen.

Aus dem Dokument DE 37 28 622 C1 ist eine Lösung bekannt, die sich mit der Thematik der Beschriftung und Kennzeichnung industrieller Erzeugnisse befasst. Aus der EP 2 792 499 A1 ist ein Laserbeschriftungsverfahren bekannt.

In der Druckschrift US 5,267,756 wird ein derartiger Fälschungsschutz für Gegenstände vorgeschlagen, wobei ein Hologramm mit einer einmaligen Codenummer am Gegenstand befestigt wird. Ein Käufer oder Besitzer des Gegenstands kann dessen Echtheit jederzeit über Abfrage bei einer Hotline verifizieren. Die Verifizierung erfolgt über eine Liste (insbesondere Datenbank), die die vergebene Codenummer enthält.

Nachteilig an derartigen Verfahren zur Fälschungssicherung ist, dass nicht ausgeschlossen werden kann, dass neben dem Gegenstand auch den Fälschungsschutz, also in diesem Fall das Hologramm mit der einmaligen Codenummer, kopiert wird.

Aus der DE 102012018388 B4 ist eine Einrichtung zur Erkennung eines Codes auf einem Artikel oder dessen Verpackung bekannt, wobei die Daten des Codes mit zumindest einem optischen Lesegerät maschinell eingelesen und in einer elektronischen Datenverarbeitungseinheit weiterverarbeitet, dekodiert und gespeichert werden, dadurch gekennzeichnet, dass das optische Lesegerät zumindest eine auf einen auf einer Unterlage positionierten Artikel oder dessen Verpackung gerichtete Kamera aufweist, welcher zumindest drei Beleuchtungskörper zugeordnet sind, wobei die Beleuchtungskörper im Raum zueinander und bezüglich des Artikels oder der Verpackung so angeordnet sind, dass bei einem zu erkennenden geprägten Code eine unterschiedliche Schattenbildung im Bereich des geprägten Codes generiert und aufgrund der Schattenbildung in der an der Kamera angeschlossenen Datenverarbeitungseinheit der geprägte Code erkannt wird.

Nachteilig ist bei solche Lösungen der Umstand, dass diese nicht auf der Oberfläche vieler Produkte aus technischen Hinderungsgründen angebracht werden können. Besonders bei Produkten mit einer technischen Oberfläche, welche bestimmte spezifische Eigenschaften aufweisen soll, wie z. B. als Dichtungsfläche oder Anlagefläche an einem anderen Bauteil, können solche Labels nicht angebracht werden.

Aus dem Stand der Technik sind auch Laserstrukturierungsverfahren zur Strukturierung an Oberflächen von Bauteilen mit einem Laserstrahl bekannt. Die Ausbildung von Strukturelemente erfolgt dabei z. B. mittels Laserinterferenzstrukturierung. Bei bekannte Verfahren wird z. B. ein Laserstrahl auf ein optisches diffraktives Element gerichtet, mit dem der Laserstrahl in mehrere Teilstrahlen aufgeteilt werden kann. Die Teilstrahlen werden dann mit zwei in einem Abstand zueinander angeordneten optischen fokussierenden Linsen auf eine zu strukturierende Oberfläche gerichtet. Dabei werden die Teilstrahlen mit einer der beiden Linsen zusätzlich in ihrer Strahlrichtung so verändert, dass sie auf den gleichen Oberflächenbereich eines Bauteils auftreffen. Da die optischen Linsen eine konstante Brennweite aufweisen, ist ein Austausch gegen mindestens eine andere, eine davon unterschiedliche Brennweite aufweisende Linse erforderlich, wenn die Interferenzperiode verändert werden soll.

Bei einer anderen bekannten Möglichkeit wird ein Laserstrahl mittels mindestens einer Strahlteilervorrichtung in Teilstrahlen aufgeteilt und die so erhaltenen Teilstrahlen werden mit Hilfe von reflektierenden Elementen aus unterschiedlichen Raumrichtungen auf die zu strukturierende Oberfläche zur Erzeugung einer spezifischen Struktur gerichtet. Dabei sollen die Teilstrahlen jeweils die gleiche Weglänge bis zum Auftreffen auf die Oberfläche durchlaufen. Hierfür wird ein erheblicher Platzbedarf benötigt. Für eine Anpassung der Interferenzperiode ist ferner eine aufwändige präzise Justierung von reflektierenden optischen Elementen notwendig.

Aus der DE 102 59 443 A1 ist ein Bearbeitungsverfahren zur optischen Untersuchung und Bearbeitung einer Probe bekannt.

Aus der DE 10 2006 000 720 A1 ist eine Laserbearbeitungsmaschine zur Ausbildung von Nuten bekannt, die ebenfalls nicht geeignet ist, um technisch funktionale Oberflächen von Bauteilen zu kennzeichnen. So würde z. B. das Einbringen von Nuten in eine Dichtungsfläche einer Kolbenstange, die Dichtungseigenschaft der besagten Fläche zerstören.

Weitere Nachteile der im Stand der Technik bekannten Lösungen, die mit herkömmlichen Laserverfahren Strukturen an Oberflächen erzeugen sind:
- die mangelnde Fälschungssicherheit, da auch die Laserkennzeichnungen nachgeahmt werden, so dass der Verwender nicht ohne weiteres Original und Nachbau voneinander unterscheiden kann;
- die Zerstörung oder Beschädigung von Oberflächeneigenschaften;
- hohe Kosten für die Analyse und Auswertung der mit Laser erzeugten Strukturen.

Es ist daher Aufgabe der vorliegenden Erfindung, vorbesagte Nachteile zu überwinden und ein Verfahren zur fälschungssicheren Produktidentifikation vorzuschlagen, welche sich auch auf technisch funktionalen Oberflächen anbringen lässt, derart dass die gewünschten Oberflächeneigenschaften der betroffenen Oberfläche erhalten bleiben.

Diese Aufgabe wird durch die Merkmalskombination gemäß Patentanspruch 1 sowie Patentanspruch 4 gelöst.

Ein Grundgedanke der vorliegenden Erfindung besteht darin eine von einem Menschen visuell mit dem unbewaffneten Auge erkennbare Identifikationsstruktur zur Identifikation als Originalteil in eine Oberfläche einzubringen, ohne die Funktion der Oberfläche zu beschädigen jedoch gleichzeitig in die Identifikationsstruktur eine nicht vom Betrachter wahrnehmbare und dekodierbare kodierte Struktur, nämlich eine Kodierung in die Identifikationsstruktur einzubetten.

Hierzu wird erfindungsgemäß vorgeschlagen ein Laserverfahren, vorzugsweise ein Laserinterferenzverfahren vorzusehen, um ein spezifisches zweioder dreidimensionales Muster in die Oberfläche des zu kennzeichnenden Bauteils nur in einer solchen Tiefeneinprägung einzubringen, dass bedingt durch den Lichteinfall oder eben abhängig vom Lichteinfall und den durch die Tiefenstruktur erzeugte Lichtbeugung und Lichtreflexion eine spezifisches Muster visuell erkennbar wird. So kann zum Beispiel der Firmenname, ein Schriftzug und/oder ein Logo in einer spezifischen Darstellung oder Schriftart als Muster in minimaler Tiefe ggf. mit unterschiedlichen Tiefenstrukturen in diversen Bereichen des Musters in die Oberfläche eines Bauteils eingebracht werden. Da erfindungsgemäß ferner das Muster mit einer Kodierung überlagert ist, die aber vom Betrachter nicht erkennbar ist. Würde nun ein Nachahmer besagter Produkte versuchen auch mit einem Laserverfahren das erkennbare Muster in die Oberfläche einzubringen, so könnte man aber mittels einer geeigneten Dekodiervorrichtung erkennen, dass in dem Muster keine Kodierung implementiert ist.

Erfindnungsgemäß ist daher vorgesehen, dass die Kodierung beim Einbringen des Musters in die Oberfläche nach einem spezifischen Algorithmus erfolgt, der zumal nicht statisch, sondern dynamisch veränderlich sein kann, so dass z.B. ein Zeitstempel in dem Algorithmus mit in die Kodierung einfließt, so dass jedes Bauteil individuell kodiert wird. Die Dekodiervorrichtung müsste dann entsprechend ausgelegt sein, die mit dem verwendeten Algorithmus erzeugte Kodierung sowohl zu erkennen, als auch zu dekodieren.

Erfindungsgemäß wird hierzu eine Vorrichtung zur Ausbildung einer zwei- oder dreidimensionalen mikrostrukturierten Identifikationsstruktur in einem definierten Oberflächenbereich in einer Oberfläche eines Bauteils oder Produktes umfassend eine Laservorrichtung zum Erzeugen wenigstens eines spezifischen Laserstrahles, vorzugsweise eines gepulsten Laserstrahls, eine Steuerungsvorrichtung zum veränderlichen Steuern und Einstellen des oder der Laserstrahlen, eine Hardware und ein Software zur Erzeugung von Steuerbefehlen für die Steuerungsvorrichtung aus wenigstens eingegebenen und/oder gespeicherten Musterdaten eines bestimmten zwei- oder dreidimensionalen Musters sowie Kodierungsdaten zur Steuerung der Laserstrahlen derart, dass im definierten Oberflächenbereich eine zwei- oder dreidimensionalen mikrostrukturierten Identifikationsstruktur entsprechend ausbildbar ist, die eine Überlagerung des zwei- oder dreidimensionalen Musters mit den Kodierungsdaten darstellt.

Erfindungsgemäß kann vorgesehen sein, dass die mikrostrukturierte Identifikationsstruktur des Musters aus strukturierten Pixel definierter Pixelgröße zusammengesetzt ist, welche durch die erzeugte Lasertiefe des jeweiligen Pixels zusätzlich zur Auflösung des Pixels auch eine individuelle Lasertiefe erhalten, welche eine Tiefenkodierung darstellt. Neben der individuellen pixelbezogenen Kodierung, kann ferner auch eine anderen z. B. segmentbezogene Tiefenkodierung erfolgen, bei der in definierten Teilsegementen der mikrostrukturierten Identifikationsstruktur unterschiedliche Mikrostrukturen d. h. voneinander bestimmungsgemäß abweichende Microstrukturen erzeugt werden.

Bei der vorliegenden Erfindung wird ein Laserstrahl vorzugsweise in zwei oder mehr Laserstrahlen über eine optische Vorrichtung aufgespalten und anschließend auf der Werkstückoberfläche wieder überlagert. Dadurch kommt es zu einer periodischen Modulation der Laserintensität, welche die Strukturierung der Bauteiloberflächen ermöglicht. Ferner kann mittels einer spezifischen orts- und zeitabhängigen Modulation oder Veränderung der Laserintensität (gemäß einem spezifischen Algorithmus) die Struktur mit einer entsprechenden Kodierung versehen werden.

Mit einem auf Prozessgeschwindigkeit optimierten Design können Flächenraten von 0,36 m²/min auf metallischen Substrat realisiert werden. Möglich sind Linien und Punktstrukturen mit Perioden zwischen 5 µm und 22 µm.

Erfindungsgemäß können unterschiedliche Laserquellen vorgesehen als auch verschiedene CNC-Achssysteme verwendet werden. Damit sind selbst anspruchsvolle hochaufgelöste Strukturierungen < 300 nm erzielbar. Erfindungsgemäß ist weiter vorgesehen, dass die Kodierungsdaten zum Kodieren eines an der Oberfläche eines Bauteils zu erzeugendes Musters in einer Software der Vorrichtung als Algorithmus hinterlegt ist. Grundsätzlich kann vorgesehen sein, dass beliebige geeignete Steuerungsmittel vorgesehen werden, um die Laserintensität am Auftreffpunkt der Oberfläche zu beeinflussen. Hierzu können auch optische, zwischengeschaltete veränderbare Filter verwendet werden, die entweder zeitgesteuert oder intensitätsgesteuert Einfluß auf die Laserintensität nehmen. Alternativ sind auch Pulsverfahren denkbar, welche steuerungstechnisch am Laser umgesetzt werden, bei denen im einfachsten Fall die Pulsdauer mit der zu erzeugenden Kodierung korreliert.

Es kann ferner eine Eingabevorrichtung vorgesehen sein, um bauteilspezifische Daten (wie Eigenschaften, Material, Oberflächenbeschaffenheit usw.) des mit der Identifikationsstruktur zu versehenden Bauteils einzugeben. Hierdurch kann der zur Erzielung der mikrostrukturierten Identifikationsstruktur hinterlegte Steuerungscode entsprechend angepasst oder modifiziert werden.

Ein weiterer Aspekt der vorliegenden Erfindung betrifft eine Dekodiervorrichtung umfassend eine optische Detektionseinheit zum Auslesen der Kodierung aus einer mit der Vorrichtung erzeugten zwei- oder dreidimensionalen mikrostrukturierten Identifikationsstruktur in einem definierten Oberflächenbereich in einer Oberfläche eines Bauteils. Bevorzugt ist vorgesehen eine Muster zu verwenden, bei dem das Muster in der mikrostrukturierten Identifikationsstruktur für einen Menschen visuell ohne Verwendung einer technischen Einrichtung mit dem unbewaffneten Auge lesbaren und/oder optisch wahrnehmbaren Form in die Oberfläche eingebracht ist, während die in der mikrostrukturierten Identifikationsstruktur enthaltene Kodierung nur von einer geeignet konfigurierten Dekodiervorrichtung erfasst werden kann, da die Kodierung für einen Betrachter eine verschlüsselte nicht erkennbare Information darstellt. Hierzu muss die Dekodiervorrichtung eine Analyseeinheit enthalten, um die gemäß einem definierten Algorithmus erzeugte Kodierung zu dekodieren, was erfindungsgemäß nur möglich sein soll, wenn die Dekodiervorichtung auf das Auslesen des oder der verwendeten Algorithmen angepasst ist.

Ein weiterer Aspekt der vorliegenden Erfindung betrifft ein Verfahren zur Ausbildung einer fälschungssicheren Identifikation an einer Oberfläche eines Bauteils oder Produktes mit einer wie zuvor beschriebenen Vorrichtung mit den folgenden Schritten:
a) Bestrahlen einer Oberfläche eines Bauteils oder Produktes in einem definierten Oberflächenbereichs mit wenigstens einem, vorzugsweise mehreren Laserstrahlen der Laservorrichtung;
b) Anpassen des Laserstrahls insbesondere der Laserintensität und Laserleistung abhängig vom Auftreffbereich (Δx, Δy) des oder der Laserstrahlen auf einem Oberflächensegment mittels einer Steuerungseinrichtung entsprechend einem definierten Steuerungsalgorithmus zur Erzeugung eines jeweils spezifischen Laserstrahls bzw. einer definierten Laserintensität in dem definierten Auftreffbereich (Δx, Δy) des Oberflächenbereich und
c) Erzeugen einer vorzugsweise dreidimensionalen mikrostrukturierten Identifikationsstruktur in dem definierten Oberflächenbereich zur Ausbildung einer (fälschungssicheren) Identifikation dergestalt, dass die mikrostrukturierte Oberfläche eine Überlagerung einer nicht-kodierten Struktur mit einer Kodierung darstellt.

Erfindungsgemäß ist bei dem Verfahren weiter vorgesehen, dass der Steuerungsalgorithmus zum Steuern, Anpassen und/oder Modifizieren des Laserstrahles wenigstens aus den Musterdaten eines zu erzeugenden Musters und den Kodierdaten einer gewünschten Kodierung erzeugt wird. Als Muster kann z. B. ein von einem Betrachter lesbarer Schriftzug oder eine Logo dienen.

Weiter ist vorgesehen, dass die Strukturierungstiefe beim erfindungsgemäßen Verfahren im Bereich von 300nm bis 10 µm liegt. Für die Realisierung einer solchen minimal tiefen Struktur wird beispielsweise eine Mehrstrahl-Laserinterferenz-Technik verwendet, bei der als Strahlquelle kommt ein frequenzvervielfachter Nd:YAG-Laser mit einer Wellenlänge von 355 nm, einer Pulsenergie von 15 mJ und einer Pulslänge von 38ns bei einer Repetitionsrate von 15 kHz zum Einsatz, wobei die Polarisation des kollimierten Laserstrahls mit Hilfe einer Lambda-Halbe-Platte gedreht wird, so dass der Laserstrahl senkrecht zur Einfallsebene polarisiert ist. Ferner ist ein Strahlenteiler vorgesehen zur Aufspaltung des Laserstrahls in zwei oder mehrere Laserstrahlen.

Mit Hilfe eines Achsmanipulators und einer drei-Achs-Verschiebeanordnung, einem Rotationstisch und zwei zusätzlichen Goniometern, die orthogonal zueinander angeordnet werden, lässt sich das Bauteil einerseits exakt zu den Laserstrahlen ausrichten und zur Erzeugung einer flächigen Strukturierung somit auch in wenigstens zwei Achsen verschiebbar.

In einer vorteilhaften Ausgestaltung der Erfindung ist vorgesehen, dass in den Steuerungsalgorithmus zum Steuern und Anpassen des Laserstrahles ferner Daten korrelierend zur spezifischen Funktion der Oberfläche einbezogen werden, die vorzugsweise über eine Eingabeeinrichtung eingegeben werden können.

Weiter bevorzugt ist vorgesehen, wenn die beim Verfahren erzeugte maximale Tiefe der zwei- oder dreidimensionalen mikrostrukturierten Identifikationsstruktur in dem definierten Oberflächenbereich gemessen gegenüber dem diesen Oberflächenbereich umgebenden Bereich der Oberfläche in einem Bereich von 300 nm bis 300 µm, vorzugsweise von 750 nm bis 10 µm liegt. Weiter vorteilhaft ist es, wenn die Höhenunterschiede innerhalb der Identifikationsstruktur, die durch die Kodierung gegenüber dem unkodierten Muster erzeugt wurden, im Bereich zwischen 500 nm bis 10 µm, vorzugsweise in einem Bereich zwischen 750 nm und 2,5 µm liegt.

Ein weiterer Aspekt der vorliegenden Erfindung betrifft ein Bauteil mit einer Funktionsoberfläche (vorzugsweise eine Dichtungsfläche), welches in einem Oberflächenbereich dieser Oberfläche eine zwei- oder dreidimensionalen mikrostrukturierten Identifikationsstruktur aufweist.

Weiter vorteilhaft ist es, wenn die mikrostrukturierten Identifikationsstruktur eine Überlagerung eines zwei- oder dreidimensionalen Musters mit einer nur mittels einer geeigneten Dekodiervorrichtung erfassbaren Kodierung aufweist.

Erfindungsgemäß wird daher ein Bauteil, vorzugsweise eine Kolbenstange für eine Gasdruckfeder sowie eine Gasdruckfeder mit einer Kolbenstange vorgeschlagen, bei der auf der zylinderförmigen Dichtfläche der Kolbenstange eine mikrostrukturierten Identifikationsstruktur aufgebracht ist.

Vorzugsweise sind innerhalb der Struktur Laserinterferenzmuster durch farbliche Schattierungen erkennbar, die beim Verfahren eingebracht wurden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: zwei unterschiedlich codierte mikrostrukturierte Identifikationsstrukturen eines Musters in einer Aufsicht;
- Fig. 2: eine mikrostrukturierte Identifikationsstruktur in einer Schnittansicht;
- Fig.3: ein Ausführungsbeispiel einer Vorrichtung zur Ausbildung einer zwei- oder dreidimensionalen mikrostrukturierten Identifikationsstruktur und
- Fig. 4: Kolbenstange einer Gasdruckfeder.

Im Folgenden wird die Erfindung anhand von Ausführungsbeispielen näher erläutert, wobei gleiche Bezugszeichen auf gleiche funktionale und/oder strukturelle Merkmale hinweisen.

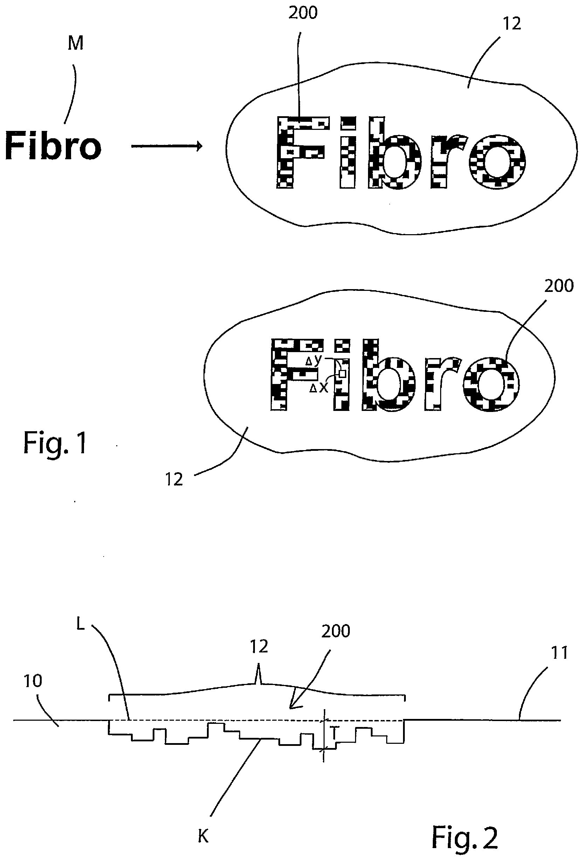

In der Fig. 1 sind zwei unterschiedlich kodierte mikrostrukturierte Identifikationsstrukturen 200 eines Musters M in einer Aufsicht und darunter in der Fig. 2 eine beispielhafte mikrostrukturierte Identifikationsstruktur 200 in einer Schnittansicht in einem Bauteil 10 mit einer Oberfläche 11 in einem Oberflächenbereich 12 gezeigt.

Die gestrichelte Linie L stellt die Oberfläche im Zustand vor der Bestrahlung mit Laserstrahlen 20' dar. Das in Figur 1 gezeigte Muster M wurde mittels einer Tiefenkodierung K überlagert, wodurch ein spezifisches kodiertes Tiefenprofil. Das Muster M wurde in diesem Ausführungsbeispiel in eine Vielzahl von Segmente in einem Raster entlang einer x-Achse und y-Achse zerlegt und jedem Segment wurde eine Kodiertiefe T nach einem vorher definierten Kodieralgorithmus zugewiesen. Dem entsprechenden Segment wird auf der Oberfläche des zu identifizierenden Bauteils in einem Oberflächenbereich 12 ein jeweiliger Auftreffbereich Δx, Δy in der projizierten Ebene der Oberfläche 11 zugeordnet. Die Laserintensität wird in diesem Auftreffbereich Δx, Δy entsprechend der von einer Software gelieferten Kodierinformation angepasst, so dass die gewünschte Strukturtiefe T in diesem Auftreffbereich Δx, Δy erzielt wird. Die Strukturtiefe T bemisst sich als Niveauunterschied zwischen der gestrichelten Linie L und dem Niveau der Struktur in dem betreffenden Segment der mikrostrukturierte Identifikationsstruktur 200.

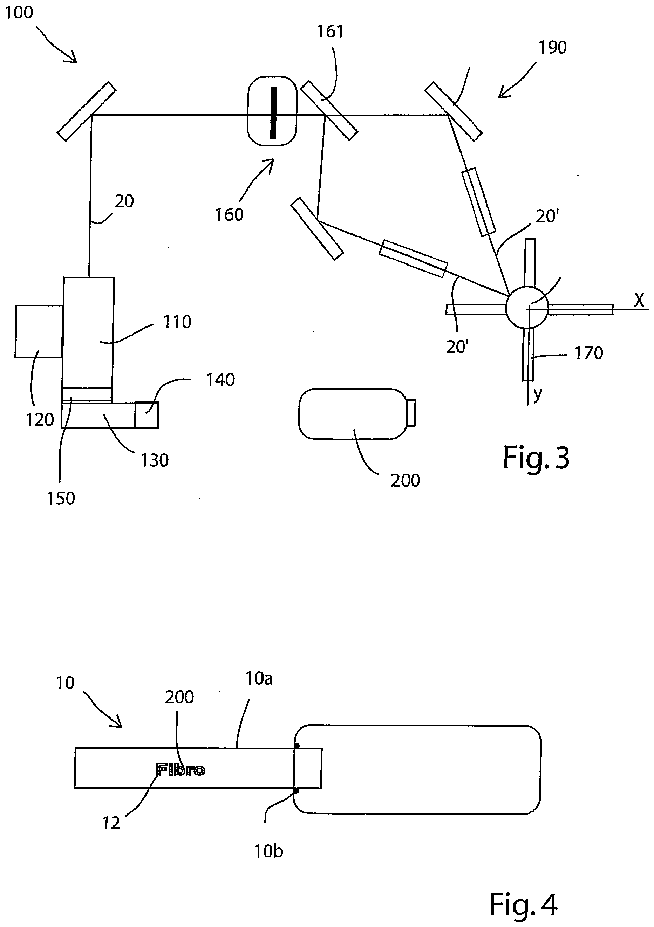

In der Figur 3 ist ein Ausführungsbeispiel einer Vorrichtung 100 zur Ausbildung einer zwei- oder dreidimensionalen mikrostrukturierten Identifikationsstruktur 200 gezeigt, um in einem wie in den Fig. 1 und 2 gezeigten definierten Oberflächenbereich 12 in einer Oberfläche 11 eines Bauteils 10 oder Produktes zu erzeugen. Die Vorrichtung 100 umfasst eine Laservorrichtung 110 zum Erzeugen wenigstens eines Laserstrahles 20, eine Steuerungsvorrichtung 120 zum veränderlichen Steuern und Einstellen des oder der Laserstrahlen 20 und eine Hardware 130 und ein Software 140 zur Erzeugung von Steuerbefehlen für die Steuerungsvorrichtung 120 aus wenigstens eingegebenen und/oder in einem Speicher 150 gespeicherten Musterdaten eines bestimmten zwei- oder dreidimensionalen Musters M sowie Kodierungsdaten zur Steuerung der Laserstrahlen 20.

Die Laservorrichtung 110 zum Erzeugen der Laserstrahlen 20 ist als Mehrstrahl-Laserinterferenz-Technik konfiguriert, bei der als Strahlquelle beispielhaft ein frequenzvervielfachter Nd:YAG-Laser mit einer Wellenlänge von 355 nm, einer Pulsenergie von 13mJ und einer Pulslänge von 38ns bei einer Repetitionsrate von 15kHz gezeigt ist.

In dem gezeigten Ausführungsbeispiel findet die Polarisation des kollimierten Laserstrahls mit Hilfe einer Lambda-Halbe-Platte statt, bei der der Laserstrahl um 90° gedreht wird, so dass der Laserstrahl senkrecht zur Einfallsebene polarisiert ist. Die Kontrolle und Variation der Polarisationsrichtung des außerordentlichen Laserstrahls kann mit Hilfe herkömmlicher Mittel (z. B. eine Lamda-Halbe-Platte) erfolgen.

Ferner ist eine optische Einrichtung 160 vorgesehen, die ein diffraktives optischen Element als Strahlenteiler umfasst, nämlich zur Aufspaltung des Laserstrahls 20 in zwei aufgeteilte Laserstrahlen 20', bei dem gezeigten Ausführungsbeispiel. Denkbar sind auch Strahlenteiler, die mehr als zwei Laserstrahlen erzeugen.

Mit Hilfe eines Manipulators 170 und einer Mehr-Achs-Verschiebeanordnung 180, lässt sich das Bauteil 10 einerseits exakt zu den Laserstrahlen 20 ausrichten und zur Erzeugung einer flächigen Strukturierung 200 somit auch in wenigstens zwei Achsen x, y verschieben.

Nach einer Umlenkung des Laserstrahls um 90° wird das Licht durch einen Raumfilter und ggf. nicht näher gezeigte Linsen geleitet

Durch Verschieben der Linse oder Einstellen der optischen Einrichtung 160 lässt sich der Laserstrahl 20 auf den gewünschten Strahldurchmesser justieren. Beispielsweise kann durch Variation des Strahldurchmessers die Fluenz (Energieflächendichte) bestimmungsgemäß variiert werden.

Der Zwei-Strahlteiler der optischen Einrichtung 160 kann z. B. aus einem dielektrisch beschichteten Glassubstrat bestehen, das den Laserstrahl in zwei kohärente Teilstrahlen gleicher Intensität aufspaltet. Die Teilstrahlen 20' mit einem Laserwinkel in Bezug zur optischen Achse des Laserstrahls 20 treffen daher auf mindestens ein optisches Element 161 der optischen Einrichtung 160, das für die Laserstrahlung hochgradig transparent ist. Dieses optische Element ist so beschaffen, dass es zur optische Brechung der Laserstrahlen 20' durch das optische Element kommt und diese in ihrer Strahlrichtung verändert werden.

Ferner ist eine Strahlungsbündelungseinrichtung 190 nachgeschaltet, bei der die zuvor geteilten Laserstrahlen 20' wieder vereint werden. Durch das gezielte Verändern optischer und geometrischer Größen, wie z. B. der Winkelbedingungen lassen sich unterschiedliche Interferenzperioden einstellen. So kann z. B. durch einen veränderlichen Abstand des diffraktiven optischen Elements (Strahlenteiler) und dem weiteren optischen Element (Strahlenvereiniger) die Interferenzperiode beeinflusst werden.

Die Steuerungsvorrichtung 120 dient demnach dem bestimmungsgemäßen Steuern und Einstellen des oder der Laserstrahlen 20 in Bezug auf wenigstens ihre Interferenzperiode und vorzugsweise auch zum Steuern und Einstellen der Strahlungsintensität. Zum Einprägen einer Kodierung wird ein Algorithmus verwendet mit dem z. B. direkt oder indirekt ein zeitabhängiges Einstellen und Steuern der Interferenzperiode und vorzugsweise auch zum Steuern und Einstellen der Strahlungsintensität erfolgt.

Mit Hilfe des Manipulators 170 und einer Mehr-Achs-Verschiebeanordnung 180 erfolgt die Bauteilbewegung relativ zum Laserauftreffbereich. Während gleichzeitig über die Steuerungsvorrichtung 120 die Laserstrahlen an der Auftrefffläche der Bauteiloberfläche eine der Laserintensität und/oder der Interferenzperiode entsprechende Struktur gebildet wird, kann durch Bewegen des mit einem Algorithmus gesteuerten Laserstrahls ein zwei- oder dreidimensionales Muster M in die Bauteiloberfläche mit minimaler Strukturtiefe erzeugt werden, wobei die durch den Algorithmus eingeprägte Kodierung in dem Muster überlagert enthalten ist.

Besonders vorteilhaft ist es wenn der Laserstrahl 20 von einer gepulst betriebenen Laserstrahlquelle 110 emittiert wird. Es kann ferner vorgesehen sein, dass die Pulsfrequenz so von der oder einer weiteren Steuerungsvorrichtung 120 gesteuert wird, dass hierdurch die pro Zeitintervall auf ein Oberflächenelement (Auftreffbereich (Δx, Δy)) auftreffende Laserenergie einstellbar ist und sich eine unterschiedliche Strukturtiefe im Microberich erzielen lässt, was für das unbewaffnete Auge eines Betrachters nicht sichtbar ist. Besonders vorteilhaft ist es, wenn eine Software 140 in der Vorrichtung implementiert ist, welche automatisch die Steuerung während dem Laserprozess gemäß abrufbarer Musterdaten und Kodierungsdaten vornimmt.

In der Figur 3 ist ferner eine nicht zur Vorrichtung 100 gehörende Dekodiervorrichtung 200 gezeigt, die über eine Hard- und Software verfügt, sowie über eine optische Detektionseinheit zum Auslesen des Musters und der Kodierung.

In der Fig. 4 ist als Bauteil 10 eine Kolbenstange 10 einer Gasdruckfeder gezeigt. Die Kolbenstange 10 weist eine zylindrische Kolbendichtfläche 10a auf. Die Kolbendichtfläche 10a wirkt mit einem Dichtelement 10b zusammen. In die Kolbendichtfläche 10a ist in einem Oberflächenbereich 12 eine dreidimensionale mikrostrukturierte Identifikationsstruktur 200 als eine Überlagerung eines zweidimensionalen Musters M (wie in der Fig. 1) mit einer Kodierung K eingebracht.

Aufgrund des mit dem erfinderischen Verfahren erzeugte Micro-Strukturtiefe in den wie zuvor erläuterten Tiefenbereichen, ist die Kolbenstange einerseits mit einer Identifikation versehen, die von einem Betrachter eindeutig wahrnehmbar ist, andererseits mit einer nicht von einer Person mit unbewaffnetem Auge erkennbaren in der Identifikation integrierten Kodierung und besitzt andererseits seine Dichtfunktion gegenüber dem Dichtelement auch in dem Oberflächenbereich 12 in dem die Identifikationsstruktur 200 eingebracht ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Vorrichtung (100) zur Ausbildung einer mikrostrukturierten Identifikationsstruktur (200) in einem definierten Oberflächenbereich (12) in einer Oberfläche (11) eines Bauteils (10) oder Produktes umfassend:
a) eine Laservorrichtung (110) zum Erzeugen wenigstens eines Laserstrahles (20);
b) eine Steuerungsvorrichtung (120) zum veränderlichen Steuern und Einstellen des oder der Laserstrahlen (20);
c) eine Hardware (130) und ein Software (140) zur Erzeugung von Steuerbefehlen für die Steuerungsvorrichtung (30) aus wenigstens Musterdaten eines bestimmten Musters (M) sowie Kodierungsdaten zur Steuerung der Laserstrahlen (20) zur Herstellung einer Tiefenkodierung (K) mehrere unterschiedlicher Kodiertiefen in dem Muster (M), **dadurch gekennzeichnet**, das ein spezifisches kodiertes Tiefenprofil erhalten wird, indem der Oberflächenbereich (12) in eine Vielzahl von Segmenten in einem Raster entlang einer x-Achse und y-Achse zerlegt und jedem Segment eine Kodiertiefe T nach einem vorher definierten Kodieralgorithmus zugewiesen ist, derart, dass im definierten Oberflächenbereich (12) eine dreidimensionale mikrostrukturierte Identifikationsstruktur (200) entsprechend ausbildbar ist, die eine Überlagerung des Musters (M) mit den Kodierungsdaten darstellt.

2. Vorrichtung (100) gemäß Anspruch 1, **dadurch gekennzeichnet, dass** die Kodierungsdaten zum Kodieren eines an der Oberfläche eines Bauteils zu erzeugendes Musters (M) in einer Software der Vorrichtung als Algorithmus hinterlegt ist.

3. Vorrichtung (100) gemäß Anspruch 1 oder 2, **dadurch gekennzeichnet, dass**, das ferner eine Eingabevorrichtung vorhanden ist, um bauteilspezifische Daten des mit der Identifikationsstruktur (200) zu versehenden Bauteils einzugeben.

4. Verfahren zur Ausbildung einer fälschungssicheren Identifikation (200) an einer Oberfläche (11) eines Bauteils (10) oder Produktes mit einer Vorrichtung gemäß einem der Ansprüche 1 bis 3 mit den folgenden Schritten:
a. Bestrahlen einer Oberfläche (11) eines Bauteils (10) oder Produktes in einem definierten Oberflächenbereichs (12) mit wenigstens einem Laserstrahl (20) der Laservorrichtung (110);
b. Segmentieren des Oberflächenbereichs (12) in eine Vielzahl von Auftreffbereiche (Δx, Δy) in einem Raster entlang einer x-Achse und y-Achse und jedem Auftreffbereich (Δx, Δy) eine Kodiertiefe T nach einem vorher definierten Kodieralgorithmus zuweisen;
c. Anpassen des Laserstrahls (20) abhängig vom Auftreffbereich (Δx, Δy) des oder der Laserstrahlen (20) mittels der Steuerungseinrichtung (120) entsprechend dem definierten Kodieralgorithmus zur Erzeugung eines jeweils spezifischen Laserstrahls in dem definierten Auftreffbereich (Δx, Δy) des Oberflächenbereich (12) zur Herstellung einer Tiefenkodierung (K) mit unterschiedlichen Kodiertiefen und dadurch
d. Erzeugen einer 3-dimensionalen mikrostrukturierten Identifikationsstruktur in dem definierten Oberflächenbereich (12) zur Ausbildung einer Identifikation dergestalt, dass die mikrostrukturierte Identifikationsstruktur eine Überlagerung einer nicht-kodierten Struktur mit der Tiefenkodierung gemäß dem Kodieralgorithmus ist.

5. Verfahren nach Anspruch 4, **dadurch gekennzeichnet, dass** der Steuerungsalgorithmus zum Steuern und Anpassen des Laserstrahles wenigstens aus den Musterdaten eines zu erzeugenden Musters (M) und den Kodierdaten einer gewünschten Kodierung erzeugt wird.

6. Verfahren nach Anspruch 4 oder 5, **dadurch gekennzeichnet, dass** in den Steuerungsalgorithmus zum Steuern und Anpassen des Laserstrahles ferner Daten korrelierend zur spezifischen Funktion der Oberfläche einbezogen werden, die vorzugsweise über eine Eingabeeinrichtung eingegeben werden können.

7. Verfahren nach Anspruch 4, 5 oder 6, **dadurch gekennzeichnet, dass** die erzeugte maximale Tiefe der mikrostrukturierten Identifikationsstruktur (200) in dem definierten Oberflächenbereich (12) gemessen gegenüber dem den Oberflächenbereich (12) umgebenden Bereich (13) der Oberfläche in einem Bereich von 300 nm bis 300 µm, vorzugsweise von 750 nm bis 10 µm liegt.

8. Verfahren nach einem der Ansprüche 4 bis 7, **dadurch gekennzeichnet, dass** die Höhenunterschiede innerhalb der Identifikationsstruktur (200), die durch die Kodierung gegenüber dem unkodierten Muster (M) erzeugt wurden, im Bereich zwischen 500 nm bis 10 µm, vorzugsweise in einem Bereich zwischen 750 nm bis 2,5 µm liegt.

9. Verfahren nach einem der Ansprüche 4 bis 8, **dadurch gekennzeichnet, dass** das Muster (M) in der mikrostrukturierten Identifikationsstruktur (200) für einen Menschen visuell ohne Verwendung einer technischen Einrichtung mit dem unbewaffneten Auge lesbaren und/oder optisch wahrnehmbaren Form in die Oberfläche eingebracht ist, während die in der mikrostrukturierten Identifikationsstruktur (200) enthaltene Tiefekodierung nur von einer geeignet konfigurierten Dekodiervorrichtung erfasst werden kann.

## Claims

1. A device (100) for forming a microstructured identification structure (200) in a defined surface region (12) in a surface (11) of a component (10) or product, said device comprising:
a) a laser device (110) for generating at least one laser beam (20);
b) a control device (120) for the variable control and setting of the laser beam or beams (20);
c) hardware (130) and software (140) for generating control commands for the control device (30) from at least pattern data of a certain pattern (M) and coding data for controlling the laser beams (20) to produce a depth coding (K) of multiple different coding depths in the pattern (M), **characterized in that** a specific coated depth profile is obtained, **in that** the surface region (12) is decomposed into a plurality of segments in a grid along an x axis and a y axis and a coding depth T is assigned to each segment according to a previously defined coding algorithm, in such a way that a microstructured identification structure (200) can accordingly be formed in the defined surface region (12), which represents a superposition of the pattern (M) with the coding data.

2. The device (100) as claimed in claim 1, **characterized in that** the coding data for coding a pattern (M) to be generated on the surface of a component is stored in software of the device as an algorithm.

3. The device (100) as claimed in claim 1 or 2, **characterized in that** furthermore an input device is provided, to input component-specific data of the component to be provided with the identification structure (200).

4. A method for forming a forgery-proof identification (200) on a surface (11) of a component (10) or product using a device as claimed in any one of claims 1 to 3, having the following steps:
a. irradiating a surface (11) of a component (10) or product in a defined surface region (12) using at least one laser beam (20) of the laser device (110);
b. segmenting the surface region (12) into a plurality of regions of incidence (Δx, Δy) in a grid along an x axis and a y axis and assigning a coding depth T to each region of incidence (Δx, Δy) according to a previously defined coding algorithm;
c. adapting the laser beam (20) in dependence on the region of incidence (Δx, Δy) of the laser beam or beams (20) by means of the control unit (120) in accordance with the defined coding algorithm to generate a respective specific laser beam in the defined region of incidence (Δx, Δy) of the surface region (12) and to produce a depth coding (K) having different coding depths; and by means thereof
d. generating a three-dimensional microstructured identification structure in the defined surface region (12) to form an identification in such a way that the microstructured identification structure is a superposition of a non-coded structure with a depth coding according to the coding algorithm.

5. The method as claimed in claim 4, **characterized in that** the control algorithm for controlling and adapting the laser beam is generated at least from the pattern data of a pattern (M) to be generated and the coding data of a desired coding.

6. The method as claimed in claim 4 or 5, **characterized in that** furthermore data correlating with the specific function of the surface, which can preferably be input via an input unit, are incorporated into the control algorithm for controlling and adapting the laser beam.

7. The method as claimed in claim 4, 5, or 6, **characterized in that** the generated maximum depth of the microstructured identification structure (200) in the defined surface region (12) measured in relation to the region (13) of the surface surrounding the surface region (12) is in a range from 300 nm to 300 µm, preferably from 750 nm to 10 µm.

8. The method as claimed in any one of claims 4 to 7, **characterized in that** the height differences within the identification structure (200), which were generated by the coding in relation to the uncoded pattern (M), are in the range from 500 nm to 10 µm, preferably in a range from 750 nm to 2.5 µm.

9. The method as claimed in any one of claims 4 to 8, **characterized in that** the pattern (M) in the microstructured identification structure (200) is introduced into the surface in a form which is visually readable by a human with the naked eye without the use of a technical device and/or is optically perceptible, while the coding contained in the microstructured identification structure (200) can be registered only by a suitably configured decoding device.

## Revendications

1. Dispositif (100) pour la formation d'une structure d'identification microstructurée (200) dans une zone de surface définie (12) dans une surface (11) d'un composant (10) ou d'un produit comprenant :
a) un dispositif laser (110) pour la génération d'au moins un rayon laser (20) ;
b) un dispositif de commande (120) pour la commande et le réglage variables du ou des rayons laser (20) ;
c) un matériel (130) et un logiciel (140) pour la génération d'instructions de commande pour le dispositif de commande (30) à partir au moins de données de modèle d'un modèle déterminé (M) ainsi que de données de codage pour la commande des rayons laser (20) pour la génération d'un codage de profondeur (K) plusieurs profondeurs de codage différentes dans le modèle (M), **caractérisé en ce qu'**un profil de profondeur codé spécifique est obtenu, **en ce que** la zone de surface (12) est décomposée en une pluralité de segments dans une trame le long d'un axe x et d'un axe y et une profondeur de codage T selon un algorithme de codage défini au préalable est attribuée à chaque segment, de telle sorte que dans la zone de surface définie (12) une structure d'identification microstructurée tridimensionnelle (200) peut être formée en conséquence, qui représente une superposition du modèle (M) avec les données de codage.

2. Dispositif (100) selon la revendication 1, **caractérisé en ce que** les données de codage pour le codage d'un modèle à générer (M) au niveau de la surface d'un composant sont déposées dans un logiciel du dispositif en tant qu'algorithme.

3. Dispositif (100) selon la revendication 1 ou 2, **caractérisé en ce que**, en outre, un dispositif de saisie est présent pour saisir des données spécifiques au composant du composant à doter d'une structure d'identification (200).

4. Procédé pour la formation d'une identification infalsifiable (200) au niveau d'une surface (11) d'un composant (10) ou d'un produit avec un dispositif selon l'une des revendications 1 à 3 avec les étapes suivantes :
a. rayonnement d'une surface (11) d'un composant (10) ou d'un produit dans une zone de surface définie (12) avec au moins un rayon laser (20) du dispositif laser (110) ;
b. segmentation de la zone de surface (12) en une pluralité de zones d'impact (Δx, Δy) dans une trame le long d'un axe x et d'un axe y et attribution à chaque zone d'impact (Δx, Δy) d'une profondeur de codage T selon un algorithme de codage défini précédemment ;
c. adaptation du rayon laser (20) en fonction de la zone d'impact (Δx, Δy) du ou des rayons laser (20) au moyen du dispositif de commande (120) conformément à l'algorithme de codage défini pour la génération d'un rayon laser respectivement spécifique dans la zone d'impact définie (Δx, Δy) de la zone de surface (12) pour la fabrication d'un codage de profondeur (K) avec différentes profondeurs de codage et de ce fait
d. génération d'une structure d'identification microstructurée tridimensionnelle dans la zone de surface définie (12) pour la formation d'une identification de façon à ce que la structure d'identification microstructurée soit une superposition d'une structure non codée avec le codage de profondeur selon l'algorithme de codage.

5. Procédé selon la revendication 4, **caractérisé en ce que** l'algorithme de commande est généré pour la commande et l'adaptation du rayon laser au moins à partir des données de modèle d'un modèle à générer (M) et des données de codage d'un codage souhaité.

6. Procédé selon la revendication 4 ou 5, **caractérisé en ce que** dans l'algorithme de commande pour la commande et l'adaptation du rayon laser des données supplémentaires sont impliquées en corrélation avec une fonction spécifique de la surface, qui peuvent de préférence être saisies par le biais d'un dispositif de saisie.

7. Procédé selon la revendication 4, 5 ou 6, **caractérisé en ce que** la profondeur maximale générée de la structure d'identification microstructurée (200) dans la zone de surface définie (12) mesurée par rapport à la zone (13) de la surface entourant la zone de surface (12) se situe dans une plage de 300 nm à 300 µm, de préférence de 750 nm à 10 µm.

8. Procédé selon l'une des revendications 4 à 7, **caractérisé en ce que** les différences de hauteur au sein de la structure d'identification (200) qui ont été générées par le biais du codage par rapport au modèle non codé (M) se situent dans une plage entre 500 nm et 10 µm, de préférence dans une plage entre 750 nm et 2,5 µm.

9. Procédé selon l'une des revendications 4 à 8, **caractérisé en ce que** le modèle (M) est installé dans la surface dans la structure d'identification microstructurée (200) pour un homme visuellement sans utilisation d'un équipement technique avec la forme lisible avec l'œil non équipé et/ou optiquement perceptible pendant que le codage de profondeur contenu dans la structure d'identification microstructurée (200) peut être acquis uniquement par un dispositif de décodage configuré de manière appropriée.
